# EUROPEAN PATENT SPECIFICATION

(11) **EP 3 372 376 B1**
(45) Date of publication and mention of the grant of the patent: **08.04.2020**
(21) Application number: 18160117.0
(22) Date of filing: 06.03.2018
(51) Int. Cl.: B29C 45/17, B29C 45/50

(54) **INJECTION MOLDING MACHINE**
SPRITZGIESSMASCHINE
MACHINE DE MOULAGE À INJECTION

(30) Priority: 07.03.2017 JP 2017043252
(43) Date of publication of application: 12.09.2018
(60) Divisional application: 20160823.9
(73) Proprietor: Sumitomo Heavy Industries, Ltd., Tokyo 141-6025 (JP)
(72) Inventor: TANAKA, Yoshitada, Chiba, 263-0001 (JP)
(74) Representative: Louis Pöhlau Lohrentz

(56) References cited:
- EP-A1- 0 314 943
- US-A- 5 011 396

## Description

### BACKGROUND OF THE INVENTION

### Field of the Invention

Certain embodiment of the present invention relates to an injection molding machine.

Priority is claimed to Japanese Patent Application No. 2017-043252, filed March 7, 2017.

### Description of Related Art

In an injection molding machine described in Japanese Unexamined Patent Application Publication No. 2002-355867, a motor shaft-side spline engaged with a screw shaft-side spline for injection driving is provided on an inner peripheral surface of a bearing cylinder separated from a motor shaft, and thus, the screw shaft and the motor shaft can be connected to each other by the splines of both shafts. An electric motor for injection driving, and a rotatable ball screw shaft which has a rear end connected to a motor shaft and protrudes inward are provided in a rear plate. Four corners of each of the rear plate and a front plate are connected to a tie bar.
Other examples of injection molding machines are descried in the EP 314 943 A1 and US 5 011 396.

In assembly of the related art, centering or positioning in a front-rear direction is insufficient, and thus, assembly accuracy is bad. For example, in some cases, centering between the electric motor and the rear plate is not performed, and an unbalanced load is applied to the spline.

### SUMMARY OF THE INVENTION

The present invention is made in consideration of the above-described problems, and a main object thereof is to provide an injection molding machine capable of improving assembly accuracy between members configuring the injection molding machine.

In order to achieve the object, according to an aspect of the present invention, there is provided an injection molding machine, including: a motor; a motion conversion mechanism which includes a screw shaft which is rotated by the motor and a screw nut which is screwed to the screw shaft and is moved forward or rearward by a rotation of the screw shaft; and a base to which the motor and the motion conversion mechanism are assembled, in which the base and a member assembled to the base are spigot-fitted to each other.

According to an aspect of the present invention, the injection molding machine capable of improving assembly accuracy between members configuring the injection molding machine is provided.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a top view showing an example of a structure of an injection unit according to the embodiment.
Fig. 4 is a cross-sectional view of the injection unit taken along line IV-IV of Fig. 3.
Fig. 5 is a cross-sectional view of the injection unit taken along line V-V of Fig. 3.
Figs. 6A to 6C are views showing an assembly procedure of each member with respect to a rear support according to the embodiment.
Figs. 7A and 7B are views showing the assembly procedure of each member with respect to the rear support following Figs. 6A to 6C.
Figs. 8A to 8F are cross-sectional views showing a first example to a sixth example of spigot-fitting between a first member and a second member.
Fig. 9 is a cross-sectional view showing an assembly completion state of each member with respect to the rear support according to a modification example.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

### Injection Molding Machine

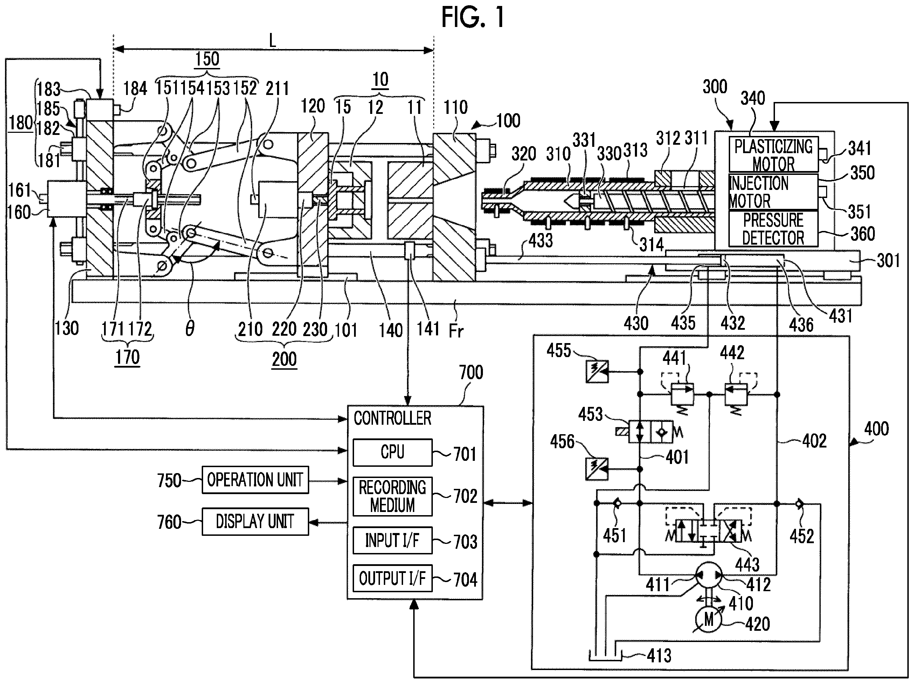

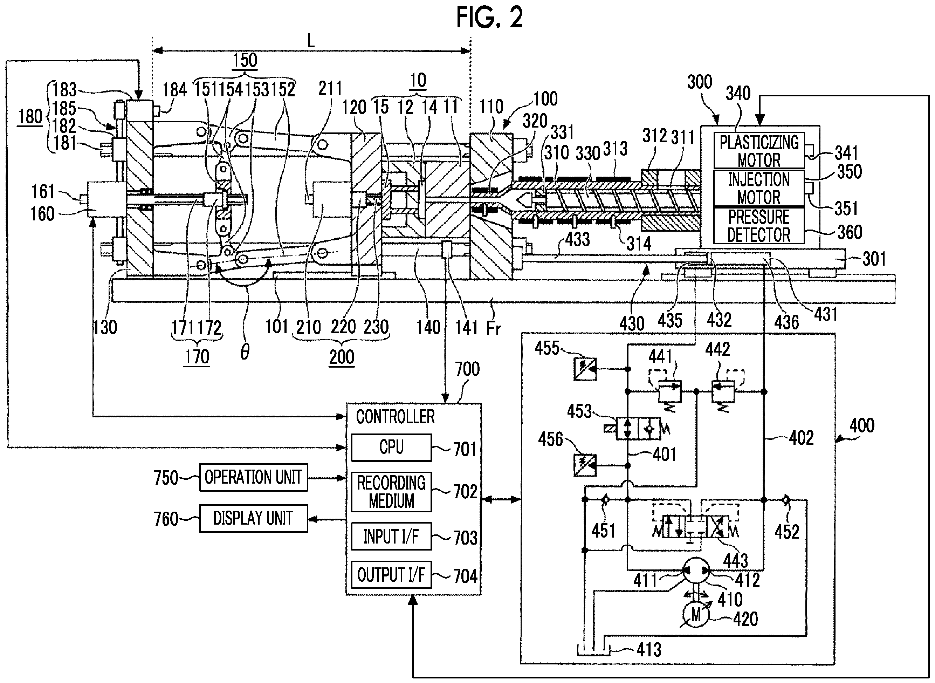

Fig. 1 is a view showing a state when a mold opening of an injection molding machine according an embodiment is completed. Fig. 2 is a view showing a state when a mold of the injection molding machine according to the embodiment is clamped. As shown in Figs. 1 and 2, the injection molding machines include a mold clamping unit 100, an ejector unit 200, an injection unit 300, a movement unit 400, and a controller 700. Hereinafter, each component of the injection molding machine will be described.

### Mold Clamping Unit

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and mold opening and closing directions are a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 moves forward or rearward with respect to the stationary platen 110, and thus, closing, clamping, and opening of the mold are performed. The mold unit 10 is configured of the stationary mold 11 and the movable mold 12.

The toggle support 130 is connected so as to be separated from the stationary platen 110, and is placed on the frame Fr to be movable in mold opening and closing directions. In addition, the toggle support 130 may be movable along a guide which is placed on the frame Fr. The guide of the toggle support 130 may be also used as the guide 101 of the movable platen 120.

Moreover, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of tie bars 140 may be used. The tie bars 140 are parallel in the mold opening and closing directions and extend according to a mold clamping force. A tie bar strain detector 141 which detects strain of the tie bar 140 is provided in at least one tie bar 140. The tie bar strain detector 141 sends signals indicating the detection results to the controller 700. The detection results of the tie bar strain detector 141 are used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is configured of a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, the configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 moves forward or the movable mold 12 comes into contact with the stationary mold 11. For example, a position or speed of the crosshead 151 is detected using an encoder 161 of the mold clamping motor 160 or the like. The encoder 161 detects the rotation of the mold clamping motor 160 and sends signals indicating the detection results to the controller 700.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 is filled with a liquid molding material by the injection unit 300. A filled molding material is solidified, and thus, a molding product is obtained. A plurality of cavity spaces 14 may be provided, and in this case, a plurality of molding products may be simultaneously obtained.

In the mold opening process, the mold clamping motor 160 is driven to move the crosshead 151 rearward to a mold opening completion position at a set speed. Accordingly, the movable platen 120 moves rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, a speed or positions (including a speed switching position, a mold closing completion position, and a mold clamping position) of the crosshead 151 in the mold closing process and the mold clamping process are collectively set as a series of setting conditions. In addition, instead of the speed, the positions, or the like of the crosshead 151, a speed, positions, or the like of the movable platen 120 may be set.

Meanwhile, the toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 12 comes into contact with the stationary mold 11 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185 configured of a belt, a pulley, or the like. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like instead of the belt, the pulley, or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 may be fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using an encoder 184 of the mold space adjustment motor 183. The encoder 184 detects a rotation amount or a rotation direction of the mold space adjustment motor 183 and sends signals indicating the detection results to the controller 700. The detection results of the encoder 184 are used to control the position of the toggle support 130 or to monitor or control the gap L.

The mold space adjustment mechanism 180 rotates one of the screw shaft 181 and the screw nut 182 which are screwed to each other to adjust the gap L. A plurality of mold space adjustment mechanisms 180 may be used, and a plurality of mold space adjustment motor 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and adjusts the temperatures of the plurality of tie bars 140 in cooperation. The gap L increases as the temperature of the tie bar 140 increases . The temperatures of the plurality of tie bars 140 can be adjusted independently.

For example, the tie bar temperature controller includes a heating unit such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed be low the lower platen. The toggle mechanism is disposed between the toggle support and the lower platen and lifts or lowers the movable platen. The mold clamping motor operates the toggle mechanism. The tie bars are parallel to each other in the vertical direction, penetrate the lower platen, and connect the upper platen and the toggle support to each other. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### Ejector Unit

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 15 which is disposed to be movable forward or rearward inside the movable mold 12. The front end portion of the ejector rod 230 may be connected to the movable member 15 or may not be connected to the movable member 15.

The ejector unit 200 performs an ejection process under the control of the controller 700.

In the ejection process, the ejector motor 210 is driven to move the ejector rod 230 at a set speed, and thus, the movable member 15 moves forward and the molding product is ejected. Thereafter, the ejector motor 210 is driven to move the ejector rod 230 rearward at a set speed, and thus, the movable member 15 moves rearward to an original position. For example, a position or speed of the ejector rod 230 is detected using an encoder 211 of the ejector motor 210. The encoder 211 detects the rotation of the ejector motor 210 and sends signals indicating the detection results to the controller 700.

### Injection Unit

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and thus, the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. The supply port 311 is formed on a rear portion of the cylinder 310. A cooler 312 such as a water cooling cylinder is provided on an outer periphery of the rear portion of the cylinder 310. A heating unit 313 such as a band heater and a temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 313 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 10 is filled with the liquid molding material.

A back flow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward to a close position (refer to Fig. 2) at which a flow path of the molding material is closed. Accordingly, the molding material accumulated in front of the screw 330 is prevented from flowing toward the rear side.

Meanwhile, when the screw 330 is rotated, the backflow prevention ring 331 is pushed toward the front side by the pressure of the molding material fed forward along the spiral grooves of the screw 330 and moves forward to an open position (refer to Fig. 1) at which the flow path of the molding material is open. Accordingly, the molding material is fed to the front side of the screw 330.

The back flow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a pressure transmitted between the injection motor 350 and the screw 330. The pressure detector 360 is provided on a pressure transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the controller 700.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an encoder 351 of the injection motor 350. The encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may move forward or may move rearward at a very slow speed.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends signals indicating the detection results to the controller 700. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by the molding material which is solidified. This state is referred to as a gate seal, and a backflow of the molding material from the cavity space 14 is prevented. After the holding pressure process, a cooling process starts. In the cooling process, solidification of the molding material in the cavity space 14 is performed. In order to shorten a molding cycle time, the plasticizing process may be performed during the cooling process.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotating speed of the screw 330 is detected using an encoder 341 of the plasticizing motor 340. The encoder 341 detects sends signals indicating the detection results to the controller 700.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 moves rearward to a plasticizing completion position and a predetermined amount of the molding materials is accumulated in front of the screw 330, the plasticizing process is completed.

In addition, the injection unit 300 of the present embodiment is an inline and screw type injection unit. However, the injection unit 300 may be a preplasticizing type injection unit. The preplasticizing type injection unit supplies molten molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

### Movement Unit

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank 413 and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which is a first chamber and a rear chamber 436 which is a second chamber. The piston rod 433 is fixed to the stationary platen 110. The piston rod 433 penetrates the front chamber 435, and a cross-sectional area of the front chamber 435 is smaller than a cross-sectional area of the rear chamber 436.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 11.

In a case where a pressure in the first flow path 401 exceeds a set value, a first relief valve 441 is opened, an excess working liquid in the first flow path 401 is returned to the tank 413, and thus, the pressure in the first flow path 401 is held to be the set value or less.

In a case where a pressure in the second flow path 402 exceeds a set value, a second relief valve 442 is opened, an excess working liquid in the second flow path 402 is returned to the tank 413, and thus, the pressure in the second flow path 402 is held to be the set value or less.

The flushing valve 443 is a valve which adjusts excess or deficiency of a circulation amount of the working liquid caused by a difference between the cross-sectional area of the front chamber 435 and the cross-sectional area of the rear chamber 436, and for example, as shown in Figs. 1 and 2, the flushing valve 433 is configured of a three-position and four-port spool valve.

In a case where the pressure in the first flow path 401 is lower than the pressure in the tank 413, a first check valve 451 is opened to supply the working liquid from the tank 413 to the first flow path 401.

In a case where the pressure in the second flow path 402 is lower than the pressure in the tank 413, a second check valve 452 is opened to supply the working liquid from the tank 413 to the second flow path 402.

An electromagnetic switching valve 453 is a control valve which controls the flow of the working liquid between the front chamber 435 of the hydraulic cylinder 430 and the first port 411 of the hydraulic pump 410. For example, the electromagnetic switching valve 453 is provided in the middle of the first flow path 401, and controls the flow of the working liquid in the first flow path 401.

For example, as shown in Figs. 1 and 2, the electromagnetic switching valve 453 is configured of a two-position and two-port spool valve. In a case where the spool valve is positioned at a first position (a position on the left side in Figs. 1 and 2), flows in both directions between the front chamber 435 and the first port 411 are permitted. Meanwhile, in a case where the spool valve is positioned at a second position (a position on the right side in Figs. 1 and 2), the flow from the front chamber 435 to the first port 411 is restricted. In this case, the flow from the first port 411 to the front chamber 435 is not restricted, but may be restricted.

A first pressure detector 455 detects a liquid pressure of the front chamber 435. The nozzle touch pressure is generated by the liquid pressure of the front chamber 435, and thus, the nozzle touch pressure can be detected using the first pressure detector 455. For example, the first pressure detector 455 is provided in the middle of the first flow path 401, and is provided at a position on the side of the front chamber 435 with respect to the electromagnetic switching valve 453. Irrespective of the state of the electromagnetic switching valve 453, the nozzle touch pressure can be detected.

The second pressure detector 456 is provided in the middle of the first flow path 401 and is provided at a position on the first port 411 side with respect to the electromagnetic switching valve 453. The second pressure detector 456 detects a liquid pressure between the electromagnetic switching valve 453 and the first port 411. In a case where the electromagnetic switching valve 453 permits flows in both directions between the first port 411 and the front chamber 435, the liquid pressure between the first port 411 and the electromagnetic switching valve 453, the liquid pressure between the electromagnetic switching valve 453 and the front chamber 435 are equal to each other. Accordingly, in this state, the nozzle touch pressure can be detected using the second pressure detector 456.

In addition, in the present embodiment, the nozzle touch pressure is detected using a pressure detector provided in the middle of the first flow path 401. However, for example, the nozzle touch pressure may be detected using a load cell or the like provided in the nozzle 320. That is, a pressure detector that detects the nozzle touch pressure may be provided in either the movement unit 400 or the injection unit 300.

Moreover, in the present embodiment, the hydraulic cylinder 430 is used as the movement unit 400. However, the present invention is not limited to this.

### Controller

For example, as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 is connected to an operation unit 750 or the display unit 760. The operation unit 750 receives an input operation from a user and outputs signals corresponding to the input operation to the controller 700. The display unit 760 displays an operation screen corresponding to the input operation of the operation unit 750 under the control of the controller 700. The operation screen is used for the setting of the injection molding machine or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine or the like. For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be provided to be independent to each other. In addition, a plurality of operation units 750 may be provided.

### Configuration of Injection Unit

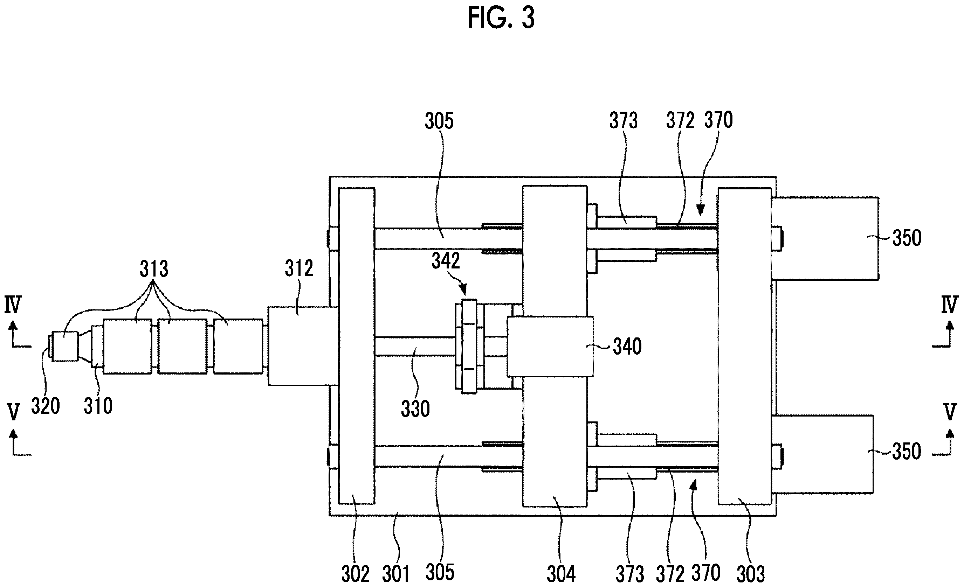

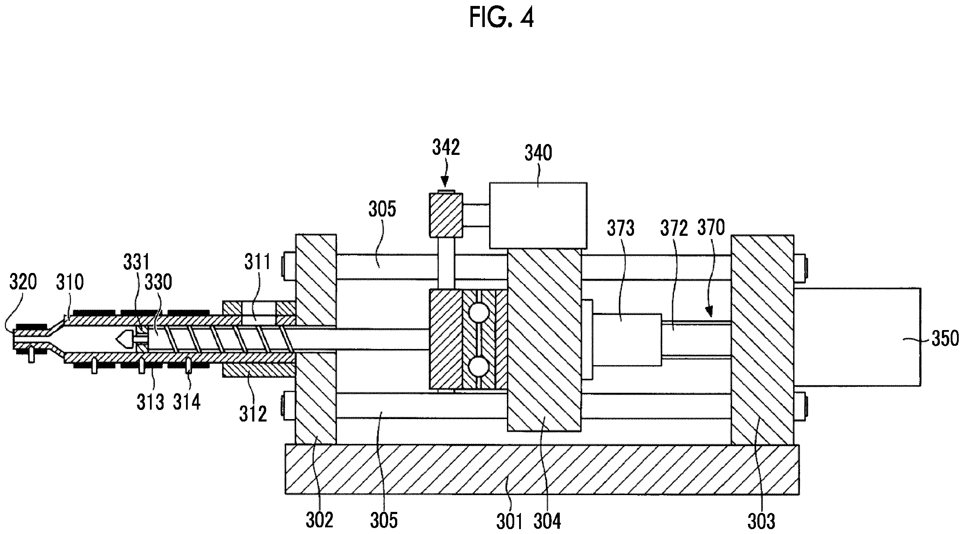

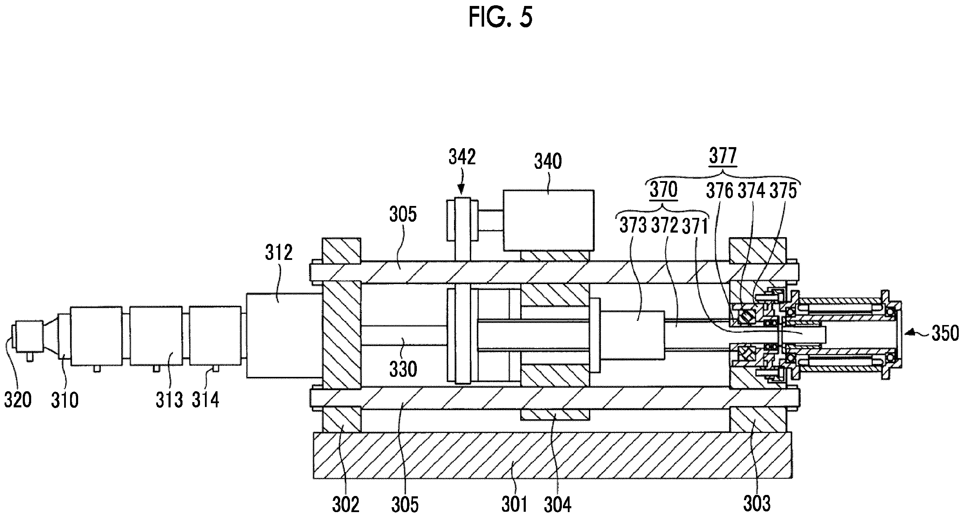

Fig. 3 is a top view showing an example of a structure of the injection unit according to an embodiment. Fig. 4 is a cross-sectional view of the injection unit taken along line IV-IV of Fig. 3. Fig. 5 is a cross-sectional view of the injection unit taken along line V-V of Fig. 3.

The injection unit 300 includes a front support 302 which holds a rear end portion of the cylinder 310 and a rear support 303 which is provided behind the front support 302. The front support 302 and the rear support 303 are fixed to the slide base 301.

A movable plate 304 is provided to be movable forward or rearward between the front support 302 and the rear support 303. Guides 305 of the movable plate 304 are bridged between the front support 302 and the rear support 303. In addition, the guides 305 may be placed on the slide base 301.

The plasticizing motor 340 may be assembled to the movable plate 304. A rotary motion of the plasticizing motor 340 is transmitted to the screw 330 by a rotation transmission mechanism 342 such as a belt or a pulley. In addition, the plasticizing motor 340 may be directly connected to an extension shaft of the screw 330 or may be disposed on the same straight line as that of the screw 330.

The injection motors 350 maybe assembled to the rear support 303. A rotary motion of each of the injection motors 350 is converted into a linear motion of the movable plate 304 by a motion conversion mechanism 370 and is transmitted to the screw 330.

The motion conversion mechanism 370 includes a rotation transmission shaft 371 which is rotated by the injection motor 350, a screw shaft 372 which is rotated by the rotation of the rotation transmission shaft 371, and a screw nut 373 which is screwed to the screw shaft 372 and is moved forward or rearward by the rotation of the screw shaft 372.

For example, the rotation transmission shaft 371 is spline-connected to a rotor inside the rotor of the injection motor 350. The rotation transmission shaft 371 includes a plurality of keys at intervals in a circumferential direction on an outer peripheral portion thereof. Meanwhile, the rotor of the injection motor 350 includes a plurality of key grooves, into which the plurality of keys are slidably inserted, on an inner peripheral portion thereof. The number of keys or the number of key grooves may be one.

Moreover, the rotation transmission shaft 371 of the present embodiment is spline-connected to the rotor inside the rotor of the injection motor 350. However, the present invention is not limited to this. For example, the rotation transmission shaft 371 may be connected to the rotor of the injection motor 350 by a friction force. In this case, a wedge or the like may be driven between the rotation transmission shaft 371 and the rotor.

The rotation transmission shaft 371 maybe integrally formed with the screw shaft 372 and may be formed separately from the screw shaft 372 and connected to the screw shaft 372.

As shown in Fig. 5, the rotation transmission shaft 371 or the screw shaft 372 is assembled to the rear support 303 to be not movable forward or rearward and to be rotatable via a bearing 374, a first bearing holder 375 which holds an outer ring of the bearing 374, and a second bearing holder 376 which holds an inner ring of the bearing 374. Meanwhile, the screw nut 373 is fixed to the movable plate 304.

A motion conversion mechanism assembly 377 is configured of the motion conversion mechanism 370, the bearing 374, the first bearing holder 375, the second bearing holder 376, or the like. The motion conversion mechanism assembly 377 is assembled in advance and attached to the rear support 303.

If the injection motors 350 are driven and the rotation transmission shafts 371 are rotated, the screw shafts 372 are rotated, and thus, the screw nuts 373 move forward or rearward. Accordingly, the movable plate 304 moves forward or rearward, and thus, the screw 330 moves forward or rearward inside the cylinder 310.

As shown in Fig. 3, the injection motors 350 and the motion conversion mechanisms 370 are respectively disposed symmetrically about a center line of the screw 330. In addition, the number of the injection motors 350 and the number of the motion conversion mechanism 370 may be 1, respectively, and the injection motor 350 and the motion conversion mechanism 370 may be disposed on the center line of the screw 330.

### Assembly of Member with respect to Rear Support

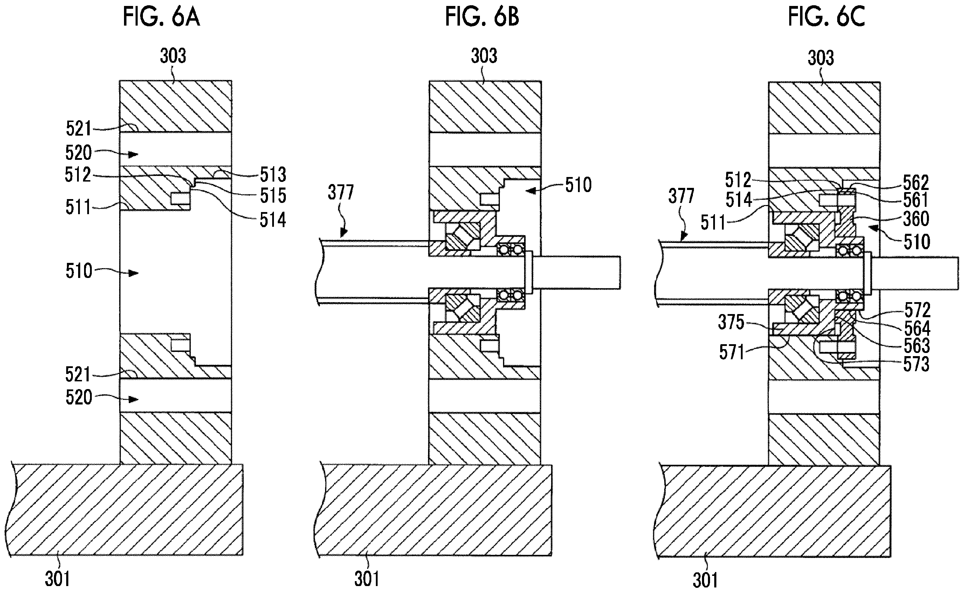

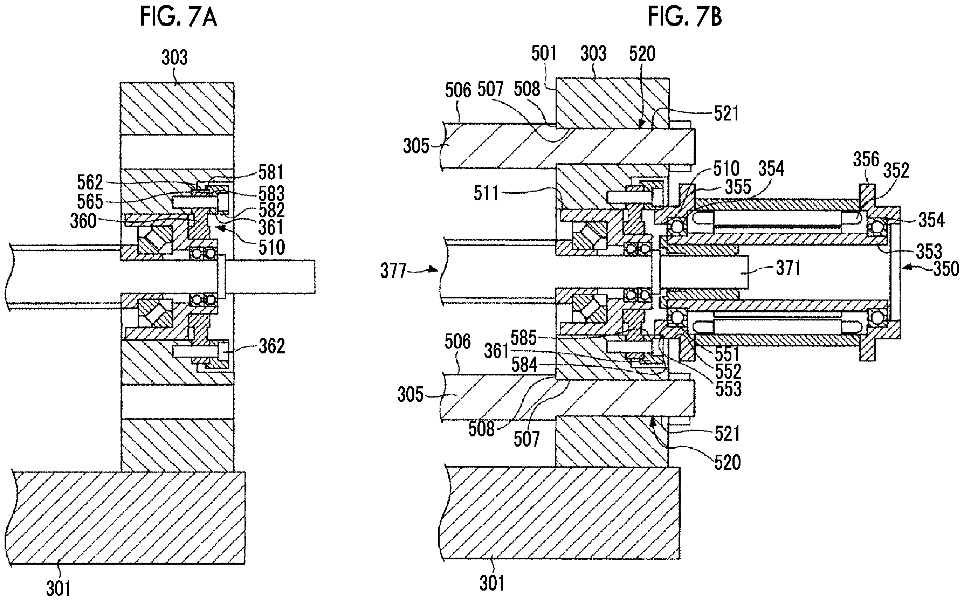

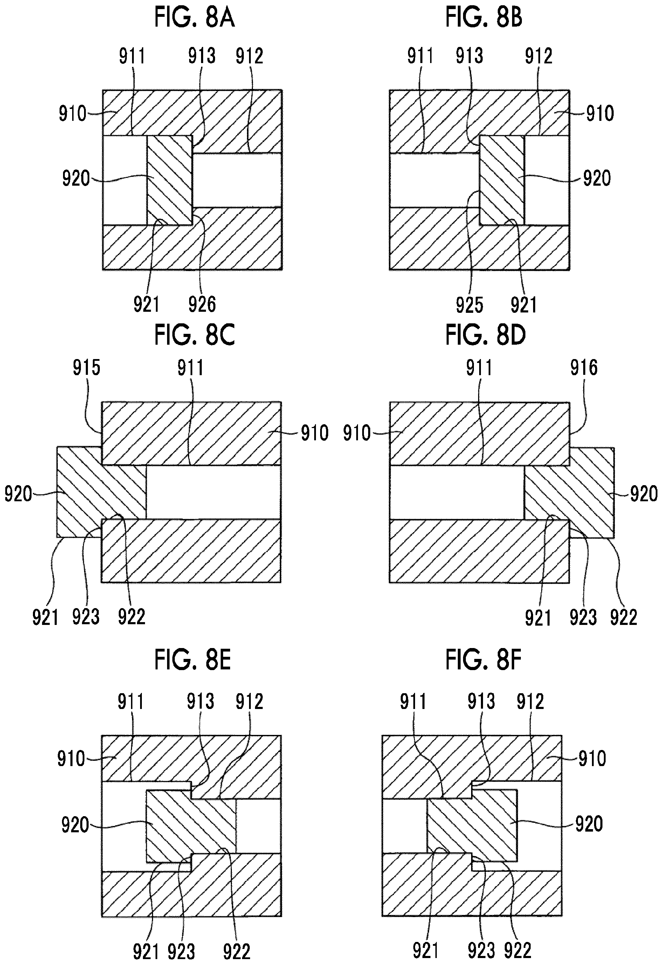

Figs. 6A to 6C are views showing an assembly procedure of each member with respect to the rear support according to the embodiment. Fig. 6A is a view showing a state before each member is assembled to the rear support, Fig. 6B is a view showing a state where the motion conversion mechanism assembly is inserted into a first assembly hole of the rear support shown in Fig. 6A, and Fig. 6C is a view showing a state where the rear support and the pressure detector shown in Fig. 6B are spigot-fitted to each other and the pressure detector and the motion conversion mechanism assembly shown in Fig. 6B are spigot-fitted. Figs. 7A and 7B are views showing the assembly procedure of each member with respect to the rear support following Figs. 6A to 6C. Fig. 7A is a view showing a state where the pressure detector and a pressure detector retainer shown in Fig. 6C are spigot-fitted to each other and Fig. 7B is a view showing a state where the pressure detector retainer and the injection motor shown in Fig. 7A are spigot-fitted to each other and the rear support and the guide shown in Fig. 7A are spigot-fitted to each other. In Figs. 6A to 6C and Figs. 7A and 7B, a left side is defined as a front side, and a right side is defined as a rear side. Hereinafter, before the assembly of each member with respect to the rear support 303 will be described with reference to Figs. 6A to 6C and Figs. 7A and 7A, spigot-fitting will be described with reference to Figs. 8A to 8F.

Figs. 8A to 8F are cross-sectional views showing a first example to a sixth example of spigot-fitting between a first member and a second member. Fig. 8A shows the first example, Fig. 8B shows the second example, Fig. 8C shows the third example, Fig. 8D shows the fourth example, Fig. 8E shows the fifth example, and Fig. 8F shows the sixth example. In Figs. 8A to 8F, a left side is defined as a front side, and a right side is defined as a rear side.

In the first example shown in Fig. 8A, a first member 910 includes a plurality of hole wall surface 911 and 912 which extend in a front-rear direction and a stepped surface 913 which has a step formed between the plurality of hole wall surfaces 911 and 912. Meanwhile, a second member 920 includes a rear end surface 926 and an outer peripheral surface 921 which extends forward from the rear end surface 926. The front hole wall surface 911 of the first member 910 and the outer peripheral surface 921 of the second member 920 come into contact with each other and the stepped surface 913 of the first member 910 and the rear end surface 926 of the second member 920 come into contact with each other.

In the second example shown in Fig. 8B, the first member 910 includes the plurality of hole wall surface 911 and 912 which extend in the front-rear direction and the stepped surface 913 which has a step formed between the plurality of hole wall surfaces 911 and 912. Meanwhile, the second member 920 includes a front end surface 925 and the outer peripheral surface 921 which extends rearward from the front end surface 925. The front hole wall surface 912 of the first member 910 and the outer peripheral surface 921 of the second member 920 come into contact with each other and the stepped surface 913 of the first member 910 and the front end surface 925 of the second member 920 come into contact with each other.

In the third example shown in Fig. 8C, the first member 910 includes the front end surface 915 and a hole wall surface 911 which extends rearward from the front end surface 915. Meanwhile, the second member 920 includes a plurality of outer peripheral surface 921 and 922 which extend in the front-rear direction and a stepped surface 923 which has a step formed between the plurality of outer peripheral surfaces 921 and 922. The hole wall surface 911 of the first member 910 which extends rearward from the front end surface 915 and the rear outer peripheral surface 922 of the second member 920 come into contact with each other, and the front end surface 915 of the first member 910 and the stepped surface 923 of the second member 920 come into contact with each other.

In the fourth example shown in Fig. 8D, the first member 910 includes a rear end surface 916 and a hole wall surface 911 which extends forward from the rear end surface 916. Meanwhile, the second member 920 includes the plurality of outer peripheral surface 921 and 922 which extend in the front-rear direction and the stepped surface 923 which has a step formed between the plurality of outer peripheral surfaces 921 and 922. The hole wall surface 911 of the first member 910 which extends forward from the rear end surface 916 and the front outer peripheral surface 921 of the second member 920 come into contact with each other, and the rear end surface 916 of the first member 910 and the stepped surface 923 of the second member 920 come into contact with each other.

In the fifth example shown in Fig. 8E, the first member 910 includes the plurality of hole wall surface 911 and 912 which extend in the front-rear direction and the stepped surface 913 which has a step formed between the plurality of hole wall surfaces 911 and 912. Meanwhile, the second member 920 includes the plurality of outer peripheral surfaces 921 and 922 which extend in the front-rear direction and the stepped surface 923 which has a step formed between the plurality of outer peripheral surfaces 921 and 922. The rear hole wall surface 912 of the first member 910 and the rear outer peripheral surface 922 of the second member 920 come into contact with each other and the stepped surface 913 of the first member 910 and the stepped surface 923 of the second member 920 come into contact with each other.

In the sixth example shown in Fig. 8F, the first member 910 includes the plurality of hole wall surface 911 and 912 which extend in the front-rear direction and the stepped surface 913 which has a step formed between the plurality of hole wall surfaces 911 and 912. Meanwhile, the second member 920 includes the plurality of outer peripheral surfaces 921 and 922 which extend in the front-rear direction and the stepped surface 923 which has a step formed between the plurality of outer peripheral surfaces 921 and 922. The front hole wall surface 911 of the first member 910 and the front outer peripheral surface 921 of the second member 920 come into contact with each other and the stepped surface 913 of the first member 910 and the stepped surface 923 of the second member 920 come into contact with each other.

Next, the assembly of each member with respect to the rear support 303 will be described with reference to Figs. 6A to 6C and Figs. 7A and 7B. The spigot-fitting is used for the assembly of each member . In Figs. 6A to 6C and Figs. 7A and 7B, a plurality of members are spigot-fitted to the rear support 303 in order. In addition, an assembly procedure is not limited to Figs. 6A to 6C and Figs. 7A and 7B.

As shown in Fig. 6A, a first assembly hole 510 and second assembly holes 520 are formed in the rear support 303. The first assembly hole 510 includes a first hole wall surface 511 which extends in the front-rear direction, a second hole wall surface 512 which has a diameter large than that of the first hole wall surface 511 and extends in the front-rear direction, and a third hole wall surface 513 which has a diameter larger than that of the second hole wall surface 512 and extends in the front-rear direction, in this order from the front side toward the rear side. In addition, the first assembly hole 510 includes a stepped surface 514 which has a step formed between the first hole wall surface 511 and the second hole wall surface 512, and a stepped surface 515 which has a step formed between the second hole wall surface 512 and the third hole wall surface 513. The motion conversion mechanism assembly 377, the pressure detector 360, the pressure detector retainer 361, and the injection motor 350 are assembled to the first assembly hole 510. Each of the second assembly hole 520 is a straight hole which extends in the front-rear direction and includes a hole wall surface 521 which extends in the front-rear direction. The guide 305 is assembled to the second assembly hole 520.

First, as shown in Fig. 6B, the motion conversion mechanism assembly 377 is inserted into the first assembly hole 510 of the rear support 303.

Next, as shown in Fig. 6C, the rear support 303 and the pressure detector 360 are spigot-fitted to each other. The rear support 303 includes the stepped surface 514 which has the step formed between the first hole wall surface 511 and the second hole wall surface 512. The pressure detector 360 is formed in a ring shape and has a constricted portion between an inner peripheral portion and an outer peripheral portion thereof. The pressure detector 360 has a front end surface 561 of the outer peripheral portion and an outer peripheral surface 562 which extends rearward from the front end surface 561. The second hole wall surface 512 of the rear support 303 and the outer peripheral surface 562 of the pressure detector 360 come into contact with each other. Moreover, the stepped surface 514 of the rear support 303 and the front end surface 561 of the outer peripheral portion of the pressure detector 360 come into contact with each other. Accordingly, centering and positioning in the front-rear direction of the pressure detector 360 with respect to the first assembly hole 510 of the rear support 303 are realized.

In addition, as shown in Fig. 6C, the motion conversion mechanism assembly 377 and the pressure detector 360 are spigot-fitted to each other. The first bearing holder 375 of the motion conversion mechanism assembly 377 includes a plurality of outer peripheral surface 571 and 572 which extend in the front-rear direction and a stepped surface 573 which has a step formed between the plurality of outer peripheral surfaces 571 and 572. Meanwhile, the pressure detector 360 includes a front end surface 563 of an inner peripheral portion thereof and a hole wall surface 564 which extends rearward from the front end surface 563. The hole wall surface 564 of the pressure detector 360 and the rear outer peripheral surface 572 of the first bearing holder 375 come into contact with each other. Accordingly, the front end surface 561 of the pressure detector 360 and the stepped surface 573 of the first bearing holder 375 come into contact with each other. Accordingly, centering and positioning in the front-rear direction of the motion conversion mechanism assembly 377 with respect to the first assembly hole 510 of the rear support 303 are realized.

Next, as shown in Fig. 7A, the pressure detector 360 and the pressure detector retainer 361 are spigot-fitted to each other. The pressure detector retainer 361 includes a plurality of hole wall surfaces 581 and 582 which extends in the front-rear direction and a stepped surface 583 which has a step formed between the plurality of hole wall surfaces 581 and 582. Meanwhile, the pressure detector 360 includes a rear end surface 565 of an outer peripheral portion thereof and an outer peripheral surface 562 which extends forward from the rear end surface 565. The front hole wall surface 581 of the pressure detector retainer 361 and the outer peripheral surface 562 of the pressure detector 360 come into contact with each other. In addition, the stepped surface 583 of the pressure detector retainer 361 and the rear end surface 565 of the outer peripheral portion of the pressure detector 360 come into contact with each other. Accordingly, centering and positioning in the front-rear direction of the pressure detector retainer 361 with respect to the first assembly hole 510 of the rear support 303 are realized. For example, the pressure detector retainer 361 and the pressure detector 360 are fixed to the rear support 303 by bolts 362.

Next, as shown in Fig. 7B, the pressure detector retainer 361 and the injection motor 350 are spigot-fitted to each other. The injection motor 350 includes a stator 352, a rotor 353, a motor bearing 354 which rotatably supports the rotor 353 with respect to the stator 352, a front flange 355 which holds the front motor bearing 354, and a rear flange 356 which holds the rear motor bearing 354. The stator 352 is interposed between the front flange 355 positioned in front of the stator 352 and the rear flange 356 positioned behind the stator 352 so as to be held. The rotation transmission shaft 371 is spline-connected to the rotor 353. The front flange 355 of the injection motor 350 includes a plurality of outer peripheral surfaces 551 and 552 which extends in the front-rear direction and a stepped surface 553 which has a step formed between the plurality of outer peripheral surfaces 551 and 552. Meanwhile, the pressure detector retainer 361 includes a rear end surface 584 and a hole wall surface 585 which extends forward from the rear end surface 584. The front outer peripheral surface 551 of the front flange 355 and the hole wall surface 585 of the pressure detector retainer 361 come into contact with each other. In addition the stepped surface 553 of the front flange 355 and the rear end surface 584 of the pressure detector retainer 361 come into contact with each other. Accordingly, centering and positioning in the front-rear direction of the injection motor 350 with respect to the first assembly hole 510 of the rear support 303 are realized. The front flange 355 is fixed to the pressure detector retainer 361 by a bolt or the like. In addition, the front flange 355 may be fixed to the rear support 303 by a bolt or the like.

Moreover, as shown in Fig. 7B, the rear support 303 and the guides 305 are spigot-fitted to each other. The rear support 303 includes front end surfaces 501 and hole wall surfaces 521 which extend rearward from the front end surfaces 501. Meanwhile, each guide 305 includes a plurality of outer peripheral surfaces 506 and 507 which extend in the front-rear direction and a stepped surface 508 which a step formed between the plurality of outer peripheral surfaces 506 and 507. Each hole wall surface 521 of the rear support 303 and the rear outer peripheral surface 507 of each guide 305 come into contact with each other. Moreover, each front end surface 501 of the rear support 303 and the stepped surface 508 of each guide 305 come into contact with each other. Accordingly, centering and positioning in the front-rear direction of the guides 305 with respect to the second assembly holes 520 of the rear support 303 are realized.

In addition, in the present embodiment, the motion conversion mechanism assembly 377, the pressure detector 360, the pressure detector retainer 361, the injection motor 350, and the guides 305 are assembled to the rear support 303 in this order. However, the assembly procedure is not particularly limited. For example, the guides 305 may be initially assembled to the rear support 303.

As described above, according to the present embodiment, the rear support 303 and a member (for example, the pressure detector 360, the guides 305) assembled to the rear support 303 are spigot-fitted to each other. Accordingly, centering and positioning in the front-rear direction of the rear support 303 and the member assembled to the rear support 303 are realized. Accordingly, assembly accuracy can be improved, and an unbalanced load caused by misalignment or the like can be suppressed. In addition, assembly work is easily performed.

Inaddition, according to the present embodiment, the member (for example, the pressure detector 360) spigot-fitted to the rear support 303 is spigot-fitted to another member (for example, the motion conversion mechanism assembly 377 or the pressure detector retainer 361). Accordingly, it possible to increase the number of members centered and positioned in the front-rear direction to the rear support 303.

In addition, according to the present embodiment, the pressure detector 360 is spigot-fitted to the rear support 303. It is possible to improve detection accuracy of the pressure detector 360 by the centering of the pressure detector 360. In addition, the pressure detector 360 may be spigot-fitted to a member spigot-fitted to the rear support 303 or may be spigot-fitted to one member among a plurality of members spigot-fitted sequentially from the rear support 303. In this case, it is possible to improve the detection accuracy of the pressure detector 360.

In addition, according to the present embodiment, the rear support 303 and the pressure detector 360 are spigot-fitted, the pressure detector 360 and the pressure detector retainer 361 are spigot-fitted, and the pressure detector retainer 361 and the injection motor 350 are spigot-fitted to each other. That is, the injection motor 350 is spigot-fitted to the pressure detector retainer 361 of the pressure detector 360 and the pressure detector retainer 361 which are sequentially spigot-fitted to the rear support 303. Accordingly, the centering and the positioning in the front-rear direction of the injection motor 350 with respect to the first assembly hole 510 of the rear support 303 are realized. In addition, according to the present embodiment, the rear support 303 and the pressure detector 360 are spigot-fitted to each other, and the pressure detector 360 and the motion conversion mechanism assembly 377 are spigot-fitted to each other. Accordingly, the centering and the positioning in the front-rear direction of the motion conversion mechanism assembly 377 with respect to the first assembly hole 510 of the rear support 303 are realized. As a result, the centering and positioning in the front-rear direction of the rotor of the injection motor 350 and the rotation transmission shaft 371 of the motion conversion mechanism assembly 377 spline-connected to each other are realized. Accordingly, it is possible to suppress an unbalanced load of the spline.

In addition, similarly to the injection motor 350, the motion conversion mechanism assembly 377 may be spigot-fitted to one member among the plurality of members spigot-fitted sequentially to the rear support 303. In this case, the centering and the positioning in the front-rear direction of the motion conversion mechanism assembly 377 with respect to the first assembly hole 510 of the rear support 303 are realized. In addition, the motion conversion mechanism assembly 377 may be spigot-fitted to the rear support 303.

In the present embodiment, the rear support 303 corresponds to a base described in claims and the injection motor 350 corresponds to a motor described in claims. In addition, the injection motor 350, the motion conversion mechanism assembly 377, or the like may be assembled to the front support 302, and in this case, the front support 302 corresponds to the base described in claims.

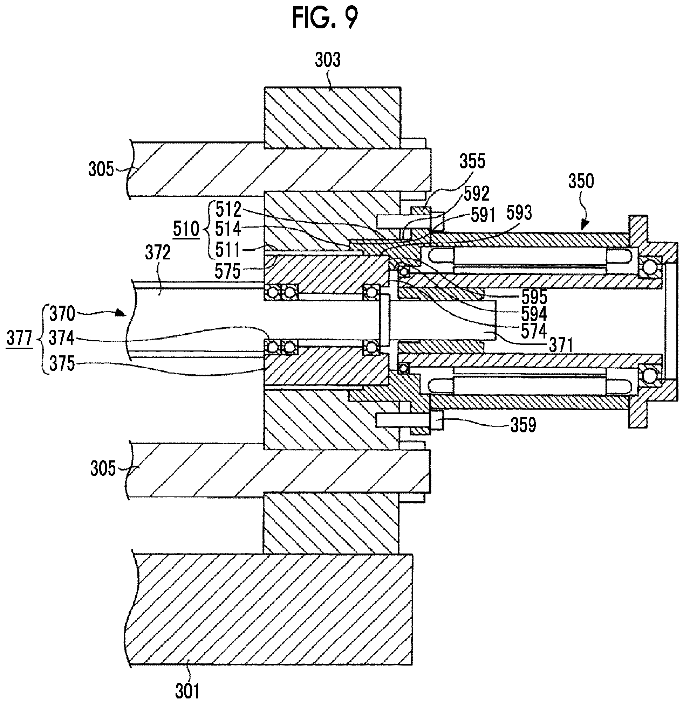

Moreover, in the present embodiment, the pressure detector 360 is spigot-fitted to the rear support 303. However, the pressure detector 360 may be provided between the screw nut 373 and the movable plate 304, and as shown in Fig. 9, the rear support 303 and the front flange 355 of the injection motor 350 may be spigot-fitted to each other, and the front flange 355 and the motion conversion mechanism assembly 377 may be spigot-fitted to each other. The motion conversion mechanism assembly 377 includes the motion conversion mechanism 370, the bearing 374, and the bearing holder 375. The rotation transmission shaft 371 or the screw shaft 372 is assembled to the rear support 303 to be not movable forward or rearward and to be rotatable via the bearing holder 375 holding the bearing 374.

In a modification example shown in Fig. 9, the first assembly hole 510 of the rear support 303 includes the first hole wall surface 511 which extends in the front-rear direction and the second hole wall surface 512 which has a diameter large than that of the first hole wall surface 511 and extends in the front-rear direction, in this order from the front side toward the rear side. In addition, the first assembly hole 510 includes the stepped surface 514 which has a step formed between the first hole wall surface 511 and the second hole wall surface 512. Meanwhile, the front flange 355 of the injection motor 350 includes the front end surface 591 and the outer peripheral surface 592 which extends rearward from the front end surface 591. The outer peripheral surface 592 of the front flange 355 and the second hole wall surface 512 of the rear support 303 come into contact with each other. Moreover, the front end surface 591 of the front flange 355 and the stepped surface 514 of the rear support 303 come into contact with each other. Accordingly, the centering and the positioning in the front-rear direction of the injection motor 350 with respect to the first assembly hole 510 of the rear support 303 are realized. The front flange 355 of the injection motor 350 are fixed to the rear support 303 by bolts 359 or the like.

Moreover, in the modification example shown in Fig. 9, the front flange 355 of the injection motor 350 includes a plurality of hole wall surfaces 593 and 594 which extend in the front-rear direction and a stepped surface 595 which has a step formed between the plurality of hole wall surfaces 593 and 594. Meanwhile, the bearing holder 375 of the motion conversion mechanism assembly 377 includes a rear end surface 574 and an outer peripheral surface 575 which extends forward from the rear end surface 574. The outer peripheral surface 575 of the bearing holder 375 and the front hole wall surface 593 of the front flange 355 come into contact with each other. In addition, the rear end surface 574 of the bearing holder 375 and the stepped surface 595 of the front flange 355 come into contact with each other. Accordingly, the centering and the positioning in the front-rear direction of the motion conversion mechanism assembly 377 with respect to the first assembly hole 510 of the rear support 303 is realized.

In the modification example shown in Fig. 9, the rear support 303 and the injection motor 350 are spigot-fitted to each other. Accordingly, the centering and the positioning in the front-rear direction of the injection motor 350 with respect to the first assembly hole 510 of the rear support 303 are realized. Moreover, in the modification example shown in Fig. 9, the injection motor 350 and the motion conversion mechanism assembly 377 are spigot-fitted to each other. As a result, the centering and positioning in the front-rear direction of the rotor of the injection motor 350 and the rotation transmission shaft 371 of the motion conversion mechanism assembly 377 spline-connected to each other are realized. Accordingly, it is possible to suppress an unbalanced load of the spline.

### Modification and Improvement

Hereinbefore, the embodiment or the like of the injection molding machine is described.

In the above-described embodiment, the example in which the present invention is applied to the injection motor 350 is described. However, the present invention may be applied to other motors. For example, the motors to which the present invention can be applied include the mold clamping motor 160, the ejector motor 210, or the like. The motor may be any one as long as it rotates the screw shaft so as to move the screw nut screwed to the screw shaft forward or rearward. In a case where the present invention is applied to the mold clamping motor 160, the toggle support 130 corresponds to the base described in claims . In this case, it is possible to improve assembly accuracy of various members with respect to the toggle support 130. Moreover, in a case where the present invention is applied to the ejector motor 210, an ejector base (not shown) provided behind the movable platen 120 corresponds to the base described in claims. In this case, it is possible to improve assembly accuracy of various members with respect to the ejector base. In addition, the ejector base may be provided as a portion of the movable platen 120.

### Brief Description of the Reference Symbols

- 100:: mold clamping unit
- 160:: mold clamping motor
- 170:: motion conversion mechanism
- 171:: screw shaft
- 172:: screw nut
- 200:: ejector unit
- 210:: ejector motor
- 220:: motion conversion mechanism
- 300:: injection unit
- 302:: front support
- 303:: rear support
- 304:: movable plate
- 305:: guide
- 350:: injection motor
- 352:: stator
- 353:: rotor
- 354:: motor bearing
- 355:: front flange
- 356:: rear flange
- 360:: pressure detector
- 361:: pressure detector retainer
- 370:: motion conversion mechanism
- 371:: rotation transmission shaft
- 372:: screw shaft
- 373:: screw nut
- 374:: bearing
- 375:: first bearing holder
- 376:: second bearing holder
- 377:: motion conversion mechanism assembly

## Claims

1. An injection molding machine, comprising:
a motor (160, 210, 350);
a motion conversion mechanism (170, 220, 370) which includes a screw shaft (171, 372) which is rotated by the motor (160, 210, 350) and a screw nut (172, 373) which is screwed to the screw shaft (171, 372) and is moved forward or rearward by a rotation of the screw shaft (171, 372); and
a base (120, 130, 301, 302, 303) to which the motor (160, 210, 350) and the motion conversion mechanism (170, 220, 370) are assembled,
**characterized in that**
the base (120, 130, 301, 302, 303) and a member (350, 360) assembled to the base (120, 130, 301, 302, 303) are spigot-fitted to each other, thus centering and positioning said member (350, 360) in the front-rear direction of the injection molding machine with respect to an assembly hole (510), and
the member (350, 360) spigot-fitted to the base (120, 130, 301, 302, 303) is spigot-fitted to another member (377, 361), thus centering and positioning said other member (377, 361) in the front-rear direction of the injection molding machine with respect to the assembly hole (510).

2. The injection molding machine according to claim 1, further comprising:
a cylinder (310); and
a screw (330) which is disposed so as to be rotatable and movable forward or rearward inside the cylinder (310),
wherein the motor is an injection motor (350) which moves the screw (330) forward or rearward, and
wherein the motion conversion mechanism (370) converts a rotary motion of the injection motor (350) into a linear motion of the screw (330).

3. The injection molding machine according to claim 2, further comprising:
a pressure detector (360) which detects a pressure transmitted between the injection motor (350) and the screw (330),
wherein the pressure detector (360) is spigot-fitted to the base (301), is spigot-fitted to the member spigot-fitted to the base (301), or is spigot-fitted to one member among a plurality of members spigot-fitted sequentially from the base (301) .

4. The injection molding machine according to claim 2 or 3,
wherein the injection motor (350) is spigot-fitted to the base (301), is spigot-fitted to the member spigot-fitted to the base (301), or is spigot-fitted to one member among the plurality of members spigot-fitted sequentially from the base (301).

## Patentansprüche

1. Spritzgießmaschine, umfassend:
einen Motor (160, 210, 350),
einen Bewegungsumwandlungsmechanismus (170, 220, 370), der eine Spindelwelle (171, 372), die durch den Motor (160, 210, 350) gedreht wird, und eine Spindelmutter (172, 373), die auf die Spindelwelle (171, 372) geschraubt ist und durch eine Drehung der Spindelwelle (171, 372) vorwärts oder rückwärts bewegt wird, einschließt, und
eine Basis (120, 130, 301, 302, 303), an welcher der Motor (160, 210, 350) und der Bewegungsumwandlungsmechanismus (170, 220, 370) montiert sind,
**dadurch gekennzeichnet, dass**
die Basis (120, 130, 301, 302, 303) und ein Element (350, 360), das an der Basis (120, 130, 301, 302, 303) montiert ist, miteinander verzapft sind, was folglich das Element (350, 360) in der Vorwärts-Rückwärts-Richtung der Spritzgießmaschine in Bezug auf ein Montageloch (510) zentriert und positioniert, und
das Element (350, 360), das mit der Basis (120, 130, 301, 302, 303) verzapft ist, mit einem anderen Element (377, 361) verzapft ist, was folglich das andere Element (377, 361) in der Vorwärts-Rückwärts-Richtung der Spritzgießmaschine in Bezug auf das Montageloch (510) zentriert und positioniert.

2. Spritzgießmaschine nach Anspruch 1, ferner umfassend:
einen Zylinder (310) und
eine Schnecke (330), die so angeordnet ist, dass sie innerhalb des Zylinders (310) drehbar und vorwärts oder rückwärts beweglich ist,
wobei der Motor ein Einspritzmotor (350) ist, der die Schnecke (330) vorwärts oder rückwärts bewegt, und
wobei der Bewegungsumwandlungsmechanismus (370) eine Drehbewegung des Einspritzmotors (350) in eine lineare Bewegung der Schnecke (330) umformt.

3. Spritzgießmaschine nach Anspruch 2, ferner umfassend:
einen Druckdetektor (360), der einen Druck erfasst, der zwischen dem Einspritzmotor (350) und der Schnecke (330) übertragen wird,
wobei der Druckdetektor (360) mit der Basis (301) verzapft ist, mit dem Element verzapft ist, das mit der Basis (301) verzapft ist, oder mit einem Element unter mehreren Elementen verzapft ist, die aufeinanderfolgend von der Basis (301) aus verzapft sind.

4. Spritzgießmaschine nach Anspruch 2 oder 3,
wobei der Einspritzmotor (350) mit der Basis (301) verzapft ist, mit dem Element verzapft ist, das mit der Basis (301) verzapft ist, oder mit einem Element unter den mehreren Elementen verzapft ist, die aufeinanderfolgend von der Basis (301) aus verzapft sind.

## Revendications

1. Une machine de moulage par injection, comprenant :
un moteur (160, 210, 350) ;
un mécanisme de conversion de mouvement (170, 220, 370) qui comprend une tige de vis (171, 372) qui est mise en rotation par le moteur (160, 210, 350) et un écrou à vis (172, 373) qui est vissé sur la tige de vis (171, 372) et est déplacé vers l'avant ou vers l'arrière par une rotation de la tige de vis (171, 372) ; et
une base (120, 130, 301, 302, 303) à laquelle le moteur (160, 210, 350) et le mécanisme de conversion de mouvement (170, 220, 370) sont assemblés,
**caractérisé en ce que**
la base (120, 130, 301, 302, 303) et un élément (350, 360) assemblé à la base (120, 130, 301, 302, 303) sont emboîtés l'un sur l'autre, de façon à centrer et positionner ledit élément (350, 360) dans la direction avant-arrière de la machine de moulage par injection par rapport à un trou d'assemblage (510), et
l'élément (350, 360) emboîté sur la base (120, 130, 301, 302, 303) est emboîté sur un autre élément (377, 361), de façon à centrer et positionner ledit autre élément (377, 361) dans la direction avant-arrière de la machine de moulage par injection par rapport au trou d'assemblage (510).

2. La machine de moulage par injection selon la revendication 1, comprenant en outre :
un cylindre (310) ; et
une vis (330) qui est disposée de façon à être rotative et mobile vers l'avant ou vers l'arrière à l'intérieur du cylindre (310),
dans laquelle le moteur est un moteur à injection (350) qui déplace la vis (330) vers l'avant ou vers l'arrière, et
dans laquelle le mécanisme de conversion de mouvement (370) convertit un mouvement rotatif du moteur à injection (350) en un mouvement linéaire de la vis (330).

3. La machine de moulage par injection selon la revendication 2, comprenant en outre :
un détecteur de pression (360) qui détecte une pression transmise entre le moteur à injection (350) et la vis (330),
dans laquelle le détecteur de pression (360) est emboîté sur la base (301), est emboîté sur l'élément emboîté sur la base (301), ou est emboîté sur un élément parmi une pluralité d'éléments emboîtés séquentiellement à partir de la base (301).

4. La machine de moulage par injection selon la revendication 2 ou 3,
dans laquelle le moteur à injection (350) est emboîté sur la base (301), est emboîté sur l'élément emboîté sur la base (301), ou est emboîté sur un élément parmi la pluralité d'éléments emboîtés séquentiellement à partir de la base (301).
